# FASCICULE DE BREVET EUROPEEN

(11) **EP 1 628 860 B1**
(45) Date de publication et mention de la délivrance du brevet: **11.07.2007**
(21) Numéro de dépôt: 04742793.5
(22) Date de dépôt: 19.05.2004
(51) Int. Cl.: B60S 3/06

(54) **MACHINE DE DEPOUSSIERAGE POUR ATELIERS DE PEINTURE DE CARROSSERIES DE VEHICULES AUTOMOBILES**
ENSTAUBUNGSVORRICHTUNG FÜR LACKIERUNGSANLAGEN VON AUTOMOBILKAROSSERIEN
DUST REMOVING MACHINE FOR CARBODY PAINTING SHOPS

(30) Priorité: 30.05.2003 FR 0306591
(43) Date de publication de la demande: 01.03.2006
(73) Titulaire: Eisenmann France SARL, 78400 Chatou (FR)
(72) Inventeur: RODRIGUES, José, F-38650 Saint-Guillaume (FR); SURPI, André, F-38170 Seyssinet-Pariset (FR); CHAMOND, Pierre, F-38120 Provesieux (FR)
(74) Mandataire: Ostertag, Ulrich
(86) Numéro de dépôt international: PCT/FR2004/001250
(87) Numéro de publication internationale: WO 2004/108490

(56) Documents cités:
- DE-A- 4 339 613
- DE-A- 19 620 685
- US-A- 4 760 620
- US-A- 5 524 329

## Description

La présente invention concerne une machine de dépoussiérage destinée à équiper les ateliers de peinture notamment de carrosseries de véhicules automobiles, telles que les carrosseries de voitures de tourisme, de camions ou d'autobus, cette machine étant prévue pour dépoussiérer les carrosseries avant l'application des diverses couches de peinture nécessaires.

Les dispositifs actuels de dépoussiérage avant mise en peinture de carrosseries utilisent habituellement des plumes d'autruches, implantées sur un moyeu rotatif perpendiculairement à l'axe de ce moyeu, et formant ainsi un rouleau de plumes, apte à être entraîné en rotation autour de son axe central. Un tel rouleau de plumes, comparable à une grosse brosse rotative, possède par exemple un diamètre d'environ 0,6 mètre, et une longueur de l'ordre de 1,2 mètre. A titre d'exemple d'un tel rouleau de plumes, il est ici fait référence au brevet US 4760620.

Au passage de carrosseries entraînées en avant sur un convoyeur, les rouleaux de plumes sont mis en rotation et rapprochés suffisamment près des carrosseries pour que les plumes viennent frotter sur celles-ci et capter la poussière, pour l'entraîner dans le capotage de la machine où une barre de désionisation, placée parallèlement à l'axe du rouleau et sur toute la hauteur de celui-ci, et alimentée en courant alternatif, annule les charges électriques acquises par un phénomène triboélectrique par les plumes, lors de leur frottement sur une carrosserie, charges qui attirent vers elles et retiennent les particules de poussières captées sur la carrosserie.

Ensuite, les plumes du rouleau, entraînées en rotation avec celui-ci, passent devant une buse d'aspiration en forme de fente parallèle à l'axe du rouleau, buse qui suce les poussières et les entraîne habituellement vers un dispositif de filtration de l'air aspiré.

La rotation du rouleau se poursuivant, les plumes libérées de la poussière précédemment captée reviennent alors dans un état de propreté vers la carrosserie, et le cycle décrit ci-dessus recommence.

Des machines de dépoussiérage, fonctionnant selon le principe qui vient d'être rappelé, sont regroupées pour constituer des installations de dépoussiérage, comme indiqué par exemple dans le brevet allemand DE 2 619 614 ou dans le brevet allemand DE 4 339 613, ou encore le brevet US 5524329. De telles installations sont constituées de deux ou quatre machines latérales, à rouleaux de plumes d'axes sensiblement verticaux, qui dépoussièrent les parties de carrosseries sensiblement verticales et parallèles au sens longitudinal de déplacement du convoyeur, et d'une machine dite "de toit", à rouleau d'axe sensiblement horizontal, qui dépoussière les parties de carrosserie sensiblement horizontales, ou les parties obliques ou sensiblement verticales et perpendiculaires au sens longitudinal de déplacement du convoyeur.

Ainsi, pour une voiture de tourisme, les parties dépoussiérées par la machine de toit sont généralement l'avant, le capot, le toit, le coffre ou le hayon arrière, et l'arrière de la carrosserie. Comme divulgué par exemple dans le brevet allemand précité DE 2 619 614, le rouleau de plumes de la machine de toit est constitué d'un moyeu monobloc rectiligne, monté tournant suivant son axe géométrique disposé horizontalement. La longueur des plumes implantées dans le moyeu peut être variable sur la longueur de ce moyeu, de façon à obtenir pour le rouleau de plumes une forme extérieure non cylindrique, et correspondant au profil moyen des parties de carrosseries à dépoussiérer.

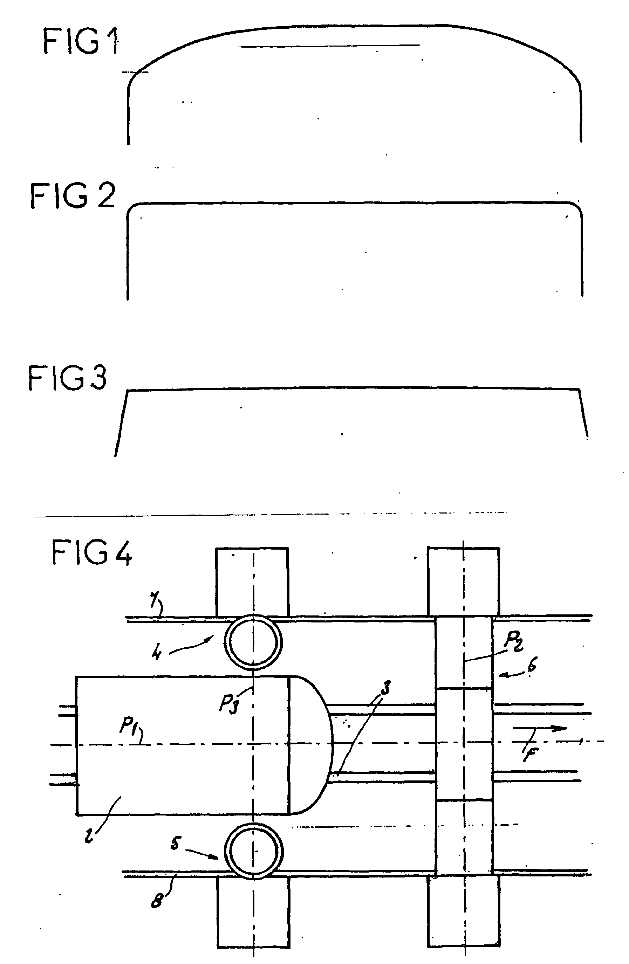

Les parties d'une carrosserie dépoussiérées par une telle machine de toit peuvent en effet être, en profil transversal, soit globalement convexes avec des extrémités plus fortement arrondies, soit sensiblement planes avec des extrémités plus ou moins arrondies, etc... ; les figures 1, 2 et 3 du dessin annexé montrent schématiquement, et à titre d'exemples, des profils pouvant ainsi être actuellement rencontrés.

Globalement, les formes d'une part du toit et d'autre part des capots d'une même carrosserie peuvent déjà être assez dissemblables dans les sections transversales de cette carrosserie et, de toute façon, les différences constatées d'un modèle de véhicule à un autre, pour un même constructeur d'automobiles, s'avèrent aussi très importantes.

Or actuellement, comme déjà indiqué ci-dessus, on se contente d'équiper le rouleau horizontal de la machine de toit de plumes de longueur variable, en général plus longues vers les extrémités du rouleau qu'en son centre, de façon à se rapprocherd'un profil moyen, censé convenir à différents modèles de carrosseries ainsi qu'aux diverses parties de carrosseries, telles que capot, toit et hayon, à dépoussiérer. Il est ici fait référence aux explications du brevet US 4760620 précité.

Cependant, compte tenu des formes de carrosseries actuelles, quelquefois très inhabituelles, et de la tendance de plus en plus forte à traiter sur une même ligne de production des modèles de véhicules très différents les uns des autres, tant par leurs dimensions que par leurs formes, on comprend aisément que la solution connue rappelée ci-dessus représente un compromis difficilement acceptable, car il est peu compatible avec un dépoussiérage correct de toutes les carrosseries à peindre.

Un problème analogue se pose pour les machines de dépoussiérage placées sur les côtés de la ligne de production, et destinées à dépoussiérer les flancs des carrosseries. Non seulement les largeurs et les hauteurs des carrosseries sont variables, mais encore, selon le galbe des carrosseries, le profil des flancs des carrosseries devient actuellement très variable. Dans le cas du brevet allemand précité DE 2 619 614, les rouleaux de plumes des machines latérales possèdent un axe vertical, et sont équipés de plumes de longueur variable, selon le même principe que la machine de toit précédemment évoquée. Dans le cas de l'autre brevet allemand précité DE 4 339 613, les rouleaux de plumes des machines latérales possèdent une forme cylindrique, mais leur axe est inclinable dans un plan perpendiculaire au sens longitudinal de déplacement du convoyeur. Dans tous les cas, un rouleau unique, monobloc, assure le dépoussiérage latéral de la carrosserie, sur toute sa hauteur. Ces solutions se révèlent elles aussi insuffisantes.

On connaît encore, par le document DE 19620685 (servant de base au préambule de la revendication 1), une machine de nettoyage et notamment de lavage de carrosseries de véhicules automobiles, qui est conçue sur le principe de brosses à rouleau montées tournantes autour de leur axe central et entraînées en rotation de manière à venir en contact avec des carrosseries pouvant être entraînées en avant sur un convoyeur. Cette machine comporte au moins deux, en particulier trois brosses à rouleau disposées sensiblement dans le prolongement l'une de l'autre et entraînées en rotation en synchronisme, les axes respectifs de ces brosses à rouleau étant situés dans un même plan transversal au sens longitudinal de déplacement du convoyeur. Le montage de ces brosses à rouleau est tel que l'angle formé par les axes respectifs de brosses consécutives puisse être ajusté, par changement de l'inclinaison de l'axe d'au moins une brosse. Les brosses à rouleau de ce document ne sont pas de rouleaux de plumes, et elles ne décrivent aucun mouvement de translation suivant leur axe, en fonction de leur inclinaison.

Il faut ici considérer aussi que les rouleaux de plumes sont des organes fragiles et coûteux, et qu'un positionnement incorrect ou approximatif de ces rouleaux, relativement aux carrosseries, risque de détériorer les plumes par un pliage excessif et de nécessiter un remplacement anticipé desdits rouleaux.

La présente invention vise à remédier aux inconvénients précédemment exposés, en fournissant une conception nouvelle de machine de dépoussiérage, applicable aussi bien à une machine de toit qu'à une machine latérale, qui permet une adaptation aisée à des carrosseries de formes et dimensions très diverses, et qui permet en particulier aux rouleaux à plumes de suivre au mieux les différents profils de carrosseries, pour un dépoussiérage efficace, tout en préservant au mieux ces rouleaux de plumes.

A cet effet, l'invention a pour objet une machine de dépoussiérage qui est susceptible d'être utilisée comme une machine de dépoussiérage dans des ateliers de peinture de carrosseries de véhicules automobiles, cette machine étant conçue sur le principe d'au moins une brosse à rouleau montée tournante autour de son axe central et entraînée en rotation, de manière à venir en contact avec des carrosseries entraînées en avant sur un convoyeur, cette machine comportant au moins deux brosses à rouleau disposées sensiblement dans le prolongement l'une de l'autre, et entraînées en rotation en synchronisme, les axes respectifs de ces brosses à rouleau étant situés sensiblement dans un même plan vertical transversal au sens longitudinal de déplacement du convoyeur, et le montage des brosses à rouleau étant tel que l'angle formé par les axes respectifs des brosses consécutives puisse être ajusté, par changement de l'inclinaison de l'axe d'au moins un rouleau, cette machine étant caractérisée par le fait que les brosses à rouleau sont des rouleaux de plumes et en ce que le montage de ces rouleaux de plumes est tel que le changement de l'inclinaison de l'axe d'au moins un rouleau de plumes s'accompagne d'une translation de ce rouleau suivant ce même axe. De cette manière, on maintient sensiblement constante la densité de plumes, au point de tangence entre deux rouleaux consécutifs, quel que soit l'angle formé par les axes respectifs de ces rouleaux.

Ainsi, l'idée de base de l'invention, applicable aussi bien à une machine de toit qu'à une machine latérale de dépoussiérage, consiste à remplacer le rouleau de plumes unique habituel par au moins deux rouleaux, disposés l'un à la suite de l'autre, avec une possibilité d'angulation variable entre les axes de ces rouleaux, entraînés en rotation de manière synchronisée. En particulier, deux ou trois rouleaux, dont les axes respectifs forment une ligne brisée, permettent une adaptation relativement précise à chaque profil de carrosserie, supérieur ou latéral, l'angulation entre les rouleaux de plumes pouvant être modifiée non seulement entre deux carrosseries différentes se présentant successivement devant la machine de dépoussiérage, mais aussi au cours du défilement d'une carrosserie pour tenir compte de son profil variable, entre l'avant et l'arrière. Les pivotements et les éventuelles translations des divers rouleaux de plumes sont commandés avantageusement par des servomoteurs, eux-mêmes pilotés par exemple par une baie de contrôle de robot, un automate programmable ou un micro-ordinateur.

Dans le cas d'une machine de toit, celle-ci comporte avantageusement trois rouleaux de plumes, à savoir un rouleau central d'axe longitudinal, et deux rouleaux latéraux, dont les axes sont inclinables, notamment de façon symétrique, par rapport à l'horizontale, les axes respectifs des trois rouleaux étant maintenus dans un même plan vertical, quelle que soit l'inclinaison des rouleaux latéraux. De plus, les deux rouleaux latéraux peuvent effectuer une translation suivant leurs axes respectifs, au fur et à mesure qu'ils s'inclinent, de manière à maintenir sensiblement constante la densité de plumes aux points de tangence de ces rouleaux latéraux avec le rouleau central. L'ensemble des trois rouleaux de la machine de toit est supporté par un caisson horizontal d'aspiration apte à être animé d'un mouvement vertical de monte et baisse, de manière à pouvoir aussi modifier la hauteur de cet ensemble de rouleaux, afin de suivre le profil longitudinal d'une carrosserie.

Dans le cas d'une machine latérale, celle-ci comporte deux rouleaux de plumes superposés, dont les axes respectifs sont inclinables l'un indépendamment de l'autre par rapport à la verticale, les axes respectifs des deux rouleaux étant maintenus dans un même plan vertical, quelle que soit leur inclinaison. Dans ce cas également, au moins l'un des deux rouleaux peut effectuer une translation suivant son axe, de manière à maintenir sensiblement constante la densité de plumes au point de tangence des deux rouleaux. L'ensemble des deux rouleaux superposés de la machine latérale est supporté par un caisson vertical, qui peut être déplacé transversalement au sens longitudinal de déplacement du convoyeur, pour se rapprocher ou s'éloigner du plan médian de ce convoyeur, de façon à s'adapter à la largeur de chacun des types de carrosseries à dépoussiérer sur la même ligne de production.

L'invention sera mieux comprise à l'aide de la description qui suit, en référence au dessin schématique annexé représentant, à titre d'exemples, des formes d'exécution de cette machine de dépoussiérage :
Figures 1, 2 et 3 (déjà mentionnées) montrent divers profils transversaux possibles de la partie supérieure d'une carrosserie de véhicule automobile;
Figure 4 est une vue en plan, très schématique, d'une installation de dépoussiérage composée d'une machine de toit et de deux machines latérales ;
Figure 5 est une vue de face d'une machine de toit conforme à la présente invention ;
Figure 6 est une vue de face d'une machine latérale conforme à la présente invention.

La figure 4 représente une installation de dépoussiérage de carrosseries de véhicules automobiles, formant une station placée sur une ligne de production, dans laquelle les carrosseries 2 à dépoussiérer sont entraînées en avant sur un convoyeur 3, qui lui même se déplace longitudinalement dans un sens d'avance indiqué par une flèche F. L'installation de dépoussiérage est réalisée de manière symétrique, par rapport au plan médian longitudinal P1 du convoyeur 3. Cette installation de dépoussiérage se compose de deux machines latérales 4 et 5 et d'une machine de toit 6. Les deux machines latérales 4 et 5 sont disposées l'une en face de l'autre, respectivement sur les deux côtés du convoyeur 3, en amont de la machine de toit 6 (par référence au sens de déplacement F du convoyeur 3). S'agissant d'un atelier de peinture de carrosseries, le convoyeur 3 et les carrosseries 2 se situent à l'intérieur d'une cabine de peinture, dont les parois latérales sont schématiquement indiquées en 7 et 8. Les machines de dépoussiérage 4, 5 et 6 possèdent des bâtis placés à l'extérieur des parois 7, 8 de la cabine de peinture, et des parties actives, sous la forme de rouleaux de plumes, placées à l'intérieur de cette cabine, de manière à pouvoir venir en contact avec les carrosseries 2 à dépoussiérer. Chaque machine de dépoussiérage 4, 5 ou 6 comporte deux ou trois rouleaux de plumes agencés de manière particulière, comme décrit ci-après plus en détail, avec référence aux figures suivantes 5 et 6.

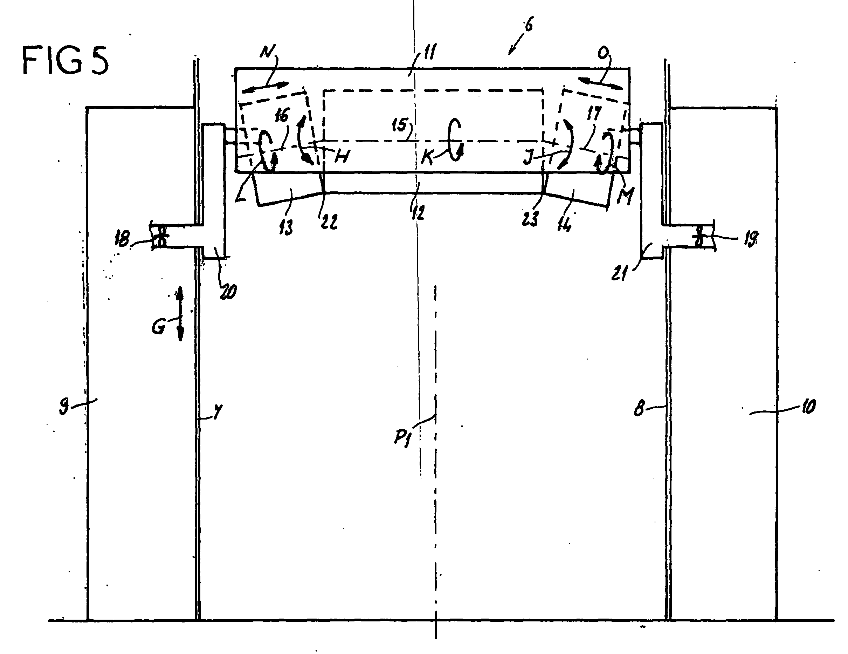

La machine de toit 6 sera d'abord décrite, en se référant à la figure 5. Cette machine de toit 6 comporte deux colonnes latérales 9 et 10 placées en vis-à-vis, à l'extérieur des parois latérales 7 et 8 de la cabine de peinture, colonnes qui contiennent un certain nombre de motorisations et de guidages, non détaillés ni représentés ici par souci de simplification et de clarté du dessin. Entre les deux colonnes latérales 9 et 10 s'étend transversalement un caisson horizontal d'aspiration 11 placé à l'intérieur de la cabine de peinture, et surmontant le convoyeur 3. Le mécanisme des colonnes 9 et 10 est conçu pour entraîner le caisson 11 suivant un mouvement vertical de monte et baisse, suivant la flèche G, pour placer ce caisson 11 à toute hauteur désirée.

Le caisson 11, ouvert à sa partie inférieure, supporte et renferme partiellement un ensemble de trois rouleaux à plumes 12, 13 et 14, dont les axes respectifs sont indiqués en 15, 16 et 17. On distingue ici un rouleau central 12, de relativement grande longueur, et deux rouleaux latéraux 13 et 14, de plus faible longueur, disposés symétriquement de part et d'autre du rouleau central 12.

L'axe 15 du rouleau central 12 est maintenu horizontal. Les axes respectifs 16 et 17 des deux rouleaux latéraux 13 et 14 possèdent une position de base horizontale, mais ils sont inclinables par rapport à cette position de base, comme indiqué par les flèches H et J. En particulier, les extrémités extérieures des deux rouleaux latéraux 13 et 14 peuvent être ainsi abaissées, par rapport à leurs extrémités intérieures. Les axes respectifs 15, 16 et 17 des trois rouleaux 12, 13 et 14 sont maintenus dans un même plan P2 vertical, transversal au sens de déplacement F du convoyeur 3, quelle que soit l'inclinaison des rouleaux latéraux 13 et 14.

Le rouleau central 12 est prévu pour être entraîné en rotation, selon la flèche K, autour de son axe 15. Les deux rouleaux latéraux 13 et 14 sont prévus pour être entraînés en rotation, selon les flèches L et M, autour de leurs propres axes 16 et 17. Les trois rouleaux 12, 13 et 14 sont ainsi entraînés en rotation dans le même sens, et de manière synchronisée, par des moyens motorisés non détaillés.

Le caisson horizontal 11 comporte encore des barres de désionisation et des fentes d'aspiration, ces parties étant généralement connues dans les machines de dépoussiérage du genre concerné. Les fentes d'aspiration sont reliées à des ventilateurs 18 et 19, logés dans les colonnes latérales 9 et 10, par des dispositifs 20 et 21 de type bielle et manivelle creuse, qui assurent la liaison entre les colonnes latérales 9 et 10 et le caisson horizontal 11, et qui commandent le mouvement de monte et baisse de ce caisson 11 suivant la flèche G.

Le mouvement général de monte et baisse du caisson 11 permet, en cours de fonctionnement, de faire suivre à l'ensemble des trois rouleaux 12, 13 et 14 le profil longitudinal de chaque carrosserie 2, au fur et à mesure de son avance sur le convoyeur 3. Ce mouvement de monte et baisse permet aux rouleaux 12, 13 et 14 de suivre aussi bien les parties sensiblement horizontales (toit, capot) des carrosseries 2, que leurs parties inclinées (hayon arrière) et même leurs parties sensiblement verticales (face avant et face arrière).

De plus, pour s'adapter aux divers profils transversaux d'une carrosserie 2 en déplacement, mais aussi aux différents types de carrosseries habituellement produits, tels que les profils illustrés aux figures 1, 2 et 3, les deux rouleaux latéraux 13 et 14 peuvent prendre une inclinaison variable sur l'horizontale, comme montré sur la figure 5.

Pour maintenir constante la densité de plumes des rouleaux, aux deux points de tangence 22 et 23 entre le rouleau central 12 et les deux rouleaux latéraux 13 et 14, on prévoit avantageusement que ces deux rouleaux 13 et 14 décrivent un mouvement supplémentaire de translation suivant leurs axes 16 et 17, comme symbolisé par les flèches N et O, ce mouvement de translation éloignant les rouleaux latéraux 13 et 14 du rouleau central 12, au fur et à mesure qu'ils s'inclinent.

En fonction de la géométrie de chaque carrosserie 2, la machine de toit 6 doit convenablement combiner et coordonner le positionnement en hauteur du caisson horizontal 11, et l'inclinaison des deux rouleaux latéraux 13 et 14, ainsi que le cas échéant les translations de ces rouleaux latéraux 13 et 14. Tous ces positionnements et mouvements sont coordonnés via une baie de contrôle de robot, un automate programmable ou un micro-ordinateur, pilotant différents servomoteurs ou vérins ou autres actionneurs, de façon à adapter la position de chaque rouleau de plumes 12, 13 ou 14 à chaque type de carrosserie 2 pouvant se présenter sur le convoyeur 3, et à chaque endroit d'une carrosserie qui, à un instant donné, se trouve face aux rouleaux de plumes 12, 13 et 14.

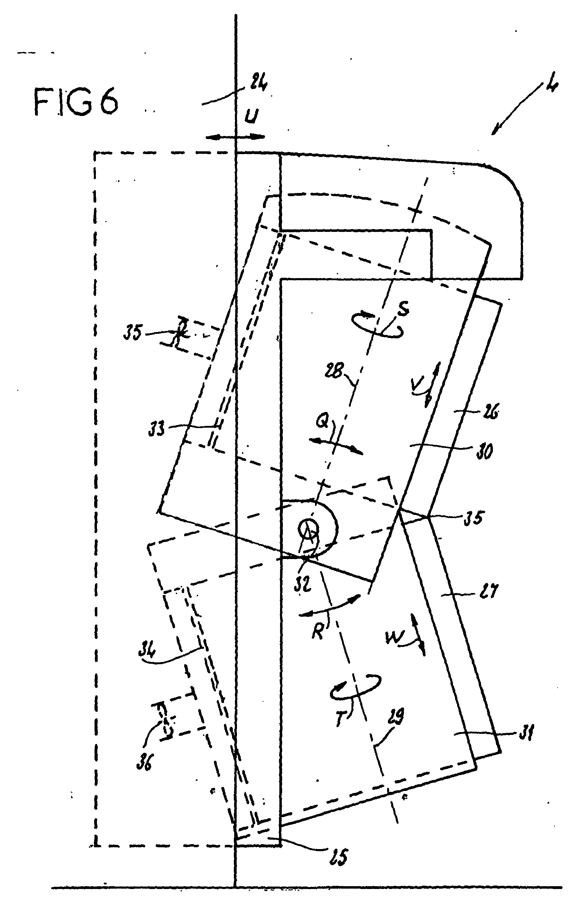

En se référant à la figure 6, on décrira maintenant l'une 4 des deux machines latérales 4 et 5, sachant que l'autre 5 de ces deux machines est rigoureusement symétrique de la première.

La machine latérale 4 comprend un bâti essentiellement métallique 24, s'élevant verticalement sur un côté de la ligne de production, et logeant les divers organes de motorisation et de guidage nécessaires, non représentés ici par souci de simplification et de clarté du dessin. Le bâti 24 comprend un caisson vertical 25, réalisé en matière plastique ou en acier, qui s'étend globalement en direction verticale et est ouvert sur son côté tourné vers le plan médian longitudinal P1 du convoyeur 3.

Sur le caisson 25 sont montés deux rouleaux de plumes superposés, respectivement un rouleau supérieur 26 et un rouleau inférieur 27, dont les axes respectifs sont indiqués en 28 et 29. Chaque rouleau 26 ou 27 est logé dans une enveloppe support, respectivement 30 ou 31, les deux enveloppes 30 et 31 étant montées pivotantes autour d'un même axe horizontal 32, situé à hauteur intermédiaire, l'axe 32 étant orienté parallèlement au plan médian longitudinal P1 du convoyeur 3.

Ainsi, les deux-rouleaux 26 et 27 possèdent une position de base verticale, mais sont inclinables l'un indépendamment de l'autre en même temps que leurs enveloppes respectives 30 et 31, par pivotement autour de l'axe horizontal 32, comme indiqué par les flèches Q et R. Les axes respectifs 28 et 29 des deux rouleaux 26 et 27 sont ainsi maintenus dans un même plan vertical P3, transversal au sens de déplacement F du convoyeur 3, quelle que soit leur inclinaison.

Les deux rouleaux superposés 26 et 27 sont prévus pour être entraînés en rotation selon les flèches S et T, autour de leurs propres axes 28 et 29, de manière synchronisée, par des moyens motorisés non détaillés.

Chaque enveloppe support 30 ou 31 d'un rouleau de plumes 26 ou 27 comprend une fente d'aspiration, respectivement 33 ou 34, raccordée par une gaine d'aspiration à un ventilateur respectif 35 ou 36.

Le caisson vertical 25 de la machine latérale 4 est monté déplaçable horizontalement et transversalement au sens de déplacement F du convoyeur 3, suivant la flèche U, de façon à adapter la position de l'ensemble des deux rouleaux 26 et 27 de cette machine 4 à la largeur de chacun des types de carrosseries 2 produits, en rapprochant ou éloignant ces deux rouleaux 26 et 27 du plan médian longitudinal P1 du convoyeur 3.

De plus, pour adapter la machine latérale 4 au profil des flancs des carrosseries 2, chacun des deux rouleaux à plumes 26 et 27 est inclinable plus ou moins fortement par rapport à la verticale, indépendamment de l'autre rouleau, par pivotement autour de l'axe 32. En particulier, comme le montre la figure 6, le rouleau supérieur 26 peut être incliné de telle sorte que son extrémité supérieure soit rapprochée du plan médian longitudinal P1 du convoyeur 3, par rapport à son extrémité inférieure. Le rouleau inférieur 27 peut être notamment incliné dans le sens inverse, c'est-à-dire que son extrémité inférieure est rapprochée du plan médian longitudinal P1 du convoyeur, par rapport à son extrémité supérieure.

Pour maintenir constante la densité de plumes des rouleaux, au point de tangence 35 entre le rouleau supérieur 26 et le rouleau inférieur 27, on prévoit avantageusement que ces deux rouleaux 26 et 27, ou l'un au moins de ces deux rouleaux, décrivent un mouvement supplémentaire de translation suivant leurs axes 28 et 29, comme symbolisé par les flèches V et W ; ce mouvement de translation éloigne le rouleau 26 ou 27 de l'axe de pivotement 32, au fur et à mesure que ledit rouleau s'incline par rapport à la verticale.

Les positionnements et mouvements du caisson 25 et des deux rouleaux 26 et 27 sont coordonnés via une baie de contrôle de robot, un automate programmable ou un micro-ordinateur, pilotant différents servomoteurs ou vérins ou autres actionneurs, de façon à adapter la position des rouleaux de plumes 26 et 27 au profil latéral de chaque type de carrosserie 2 pouvant se présenter sur le convoyeur 3, et à chaque endroit de carrosserie qui, à un instant donné, se trouve face aux rouleaux de plumes 26 et 27.

On comprend que, par la combinaison de l'action des deux machines latérales 4 et 5 et de la machine de toit 6, précédemment décrites, et compte tenu du positionnement adapté des rouleaux de plumes respectifs 12, 13, 14, 26, 27 de ces machines, l'on obtient un dépoussiérage parfait des carrosseries 2 entraînées en avant sur le convoyeur 3, en particulier des parties de carrosseries prises en charge respectivement par ces machines 4, 5 et 6. De plus, l'adaptation des rouleaux de plumes 12, 13, 14, 26, 27 au profil des carrosseries 2 évite que les plumes, qui sont des organes fragiles, soient pliées et brisées par appui sur des parties de carrosseries. '

L'on ne s'éloignerait pas du cadre de l'invention, telle que définie dans les revendications annexées :
- en réalisant des machines comportant un nombre différent de rouleaux de plumes, pourvu que ce nombre soit égal au moins à deux ;
- en prévoyant tous aménagements pour ces rouleaux de plumes et leur montage, par exemple en remplaçant les rouleaux d'allure cylindrique (tels que représentés sur le dessin) par des rouleaux avec des plumes de longueurs différenciées selon des zones annulaires, permettant de compléter et d'affiner encore les avantages de la machine selon l'invention, en permettant aux extrémités des plumes de suivre encore plus parfaitement les différents profils de carrosseries ;
- en utilisant tous moyens motorisés ou non d'ajustement des positions et inclinaisons des rouleaux, l'ajustement de certaines ou de la totalité des translations ou angulations pouvant, dans certains cas, être fait de façon manuelle ou semi-manuelle ;
- enfin, en appliquant l'invention uniquement à une machine de toit ou à des machines latérales, et non pas à l'ensemble d'une installation de dépoussiérage, et/ou en ne mettant en oeuvre que partiellement les fonctions décrites, selon les cas particuliers d'application rencontrés.

## Revendications

1. Machine de dépoussiérage, qui est susceptible d'être utilisée comme une machine de dépoussiérage dans des ateliers de peinture de carrosseries de véhicules, cette machine étant conçue sur le principe d'au moins une brosse à rouleau montée tournante autour de son axe central et entraînée en rotation, de manière à venir en contact avec des carrosseries (2) entraînées en avant sur un convoyeur (3), cette machine comportant au moins deux brosses à rouleau (12, 13, 14 ; 26, 27) disposées sensiblement dans le prolongement l'une de l'autre et entraînées en rotation en synchronisme, les axes respectifs (15, 16, 17; 28, 29) de ces brosses à rouleau étant situés sensiblement dans un même plan vertical (P2; P3) transversal au sens longitudinal de déplacement (F) du convoyeur (3), et le montage des brosses à rouleau (12, 13, 14; 26, 27) étant tel que l'angle formé par les axes respectifs (15, 16, 17; 28, 29) des brosses consécutives puisse être ajusté, par changement de l'inclinaison de l'axe d'au moins une brosse à rouleau, **caractérisée en ce que** les brosses à rouleau sont des rouleaux de plumes (12, 13, 14 ; 26, 27) et **en ce que** le montage de ces rouleaux de plumes (12, 13, 14 ; 26, 27) est tel que le changement de l'inclinaison de l'axe (16, 17 ; 28, 29) d'au moins un rouleau de plumes s'accompagne d'une translation (N, O ; V, W) de ce rouleau (13, 14; 26, 27) suivant le même axe.

2. Machine de dépoussiérage selon la revendication 1, **caractérisée en ce que** les pivotements (H, J ; Q, R) et les éventuelles translations (N, O ; V, W) des divers rouleaux de plumes (13, 14 ; 26, 27) sont commandés par des servomoteurs, eux-mêmes pilotés par exemple par une baie de contrôle de robot, un automate programmable ou un micro-ordinateur.

3. Machine de dépoussiérage selon la revendication 1 ou 2, **caractérisée en ce que** celle-ci est une machine de toit (6) et comporte trois rouleaux de plumes (12, 13, 14), à savoir un rouleau central (12) d'axe horizontal (15) et deux rouleaux latéraux (13, 14), dont les axes (16, 17) sont inclinables, notamment de façon symétrique, par rapport à l'horizontale, les axes respectifs (15, 16, 17) des trois rouleaux (12, 13, 14) étant maintenus dans un même plan vertical (P2), quelle que soit l'inclinaison des rouleaux latéraux (13, 14).

4. Machine de dépoussiérage selon la revendication 3, **caractérisée en ce que** les deux rouleaux latéraux (13, 14) effectuent une translation (N, O) suivant leurs axes respectifs (16, 17), au fur et à mesure qu'ils s'inclinent, de manière à maintenir sensiblement constante la densité de plumes aux points de tangence (22, 23) des rouleaux latéraux (13, 14) avec le rouleau central (12).

5. Machine de dépoussiérage selon la revendication 3 ou 4, **caractérisée en ce que** l'ensemble des trois rouleaux (12, 13, 14) de cette machine de toit (6) est supporté par un caisson horizontal d'aspiration (11) apte à être animé d'un mouvement vertical de monte et baisse (G), de manière à pouvoir modifier la hauteur de cet ensemble de rouleaux.

6. Machine de dépoussiérage selon la revendication 1 ou 2, **caractérisée en ce que** celle-ci est une machine latérale (4, 5) et comporte deux rouleaux de plumes superposés (26, 27), dont les axes respectifs (28, 29) sont inclinables l'un indépendamment de l'autre par rapport à la verticale, les axes respectifs (28, 29) des deux rouleaux (26, 27) étant maintenus dans un même plan vertical (P3) quelle que soit leur inclinaison.

7. Machine de dépoussiérage selon la revendication 6, **caractérisée en ce qu'**au moins l'un des deux rouleaux (26, 27) effectue une translation (V, W) suivant son axe (28, 29), en fonction de son inclinaison, de manière à maintenir sensiblement constante la densité de plumes au point de tangence (35) des deux rouleaux (26, 27).

8. Machine de dépoussiérage selon la revendication 6 ou 7, **caractérisée en ce que** l'ensemble des deux rouleaux superposés (26, 27) de cette machine latérale (4, 5) est supporté par un caisson vertical (25), qui peut être déplacé (U) transversalement au sens longitudinal de déplacement (F) du convoyeur (3), pour se rapprocher ou s'éloigner du plan médian (P1) de ce convoyeur (3).

## Claims

1. Dust-removal machine, which can be used as a dust-removal machine in vehicle bodywork painting work-shops, this machine being designed on the principle of at least one brush cylinder which is fitted so as to rotate around its central axis, and is driven in rotation, such as to come into contact with bodyworks (2) which are driven forwards on a conveyor (3), this machine comprising at least two brush cylinders (12, 13, 14; 26, 27) which are disposed substantially on the extension of one another and are driven synchronously in rotation, the respective axes (15, 16, 17; 28, 29) of these brush cylinders being situated substantially on the same vertical plane (P2; P3) which is transverse to the longitudinal direction of displacement (F) of the conveyor (3), and the assembly of the brush cylinder (12, 13, 14; 26, 27) being such that the angle formed by the respective axes (15, 16, 17; 28, 29) of the consecutive brushes can be adjusted by changing the inclination of the axis of at least one brush cylinder,
**characterised in that**
the brush cylinders are feather rollers (12, 13, 14; 26, 27), and **in that** the assembly of these feather rollers (12, 13, 14; 26, 27) is such that the change of inclination of the axis (16, 17; 28, 29) of at least one feather roller is accompanied by translation (N, 0; V, W) of this roller (13, 14; 26, 27) according to the same axis.

2. Dust-removal machine according to claim 1, **characterised in that** the pivotings (H, J; Q, R) and any translations (N, 0; V, W) of the different feather rollers (13, 14; 26, 27) are controlled by servomotors, which themselves are piloted for example by a robot control rack, a programmable automaton or a microcomputer.

3. Dust-removal machine according to claim 1 or claim 2, **characterised in that** the machine is a roof machine (6) and comprises three feather rollers (12, 13, 14), i.e. a central roller (12) with a horizontal axis (15) and two lateral rollers (13, 14), the axes (16, 17) of which can be inclined, in particular in a symmetrical manner, relative to the horizontal, the respective axes (15, 16, 17) of the three rollers (12, 13, 14) being maintained on the same vertical plane (P2) irrespective of the inclination of the lateral rollers (13, 14).

4. Dust-removal machine according to claim 3, **characterised in that** the two lateral rollers (13, 14) carry out translation (N, O) according to their respective axes (16, 17) as they are inclined, such as to maintain the density of feathers substantially constant at the points of tangency (22, 23) of the lateral rollers (13, 14) with the central roller (12).

5. Dust-removal machine according to claim 3 or claim 4, **characterised in that** the assembly of the three rollers (12, 13, 14) of this roof machine (6) is supported by a horizontal suction box (11) to which there can be imparted vertical raising and lowering movement (G) such as to be able to modify the height of this roller assembly.

6. Dust-removal machine according to claim 1 or claim 2, **characterised in that** the machine is a lateral machine (4, 5) and comprises two superimposed feather rollers (26, 27), the respective axes (28, 29) of which can be inclined independently from one another relative to the vertical, the respective axes (28, 29) of the two rollers (26, 27) being maintained on the same vertical plane (P3) irrespective of their inclination.

7. Dust-removal machine according to claim 6, **characterised in that** at least one of the two rollers (26, 27) carries out translation (V, W) according to its axis (28, 29) in accordance with its inclination, such as to maintain the density of feathers substantially constant at the point of tangency (35) of the two rollers (26, 27).

8. Dust-removal machine according to claim 6 or claim 7, **characterised in that** the assembly of the two superimposed rollers (26, 27) of this lateral machine (4, 5) is supported by a vertical box (25) which can be displaced (U) transversely to the longitudinal direction of displacement (F) of the conveyor (3), in order to approach or move away from the median plane (P1) of this conveyor (3).

## Patentansprüche

1. Entstaubungsmaschine, die zur Verwendung als Entstaubungsmaschine in Lackierwerkstätten für Fahrzeugkarosserien geeignet ist, wobei diese Maschine auf dem Prinzip mindestens einer Walzenbürste aufgebaut ist, welche um ihre Mittelachse drehbar montiert ist und in Rotation angetrieben wird, derart, dass sie in Kontakt mit auf einem Förderer (3) vorwärts bewegten Karosserien (2) kommt, wobei diese Maschine mindestens zwei Walzenbürsten (12,13,14;26,27) aufweist, von denen die eine im Wesentlichen in Verlängerung zur anderen angeordnet ist und die synchron in Rotation versetzt werden, wobei die jeweiligen Achsen (15,16,17;28,29) dieser Walzenbürsten im Wesentlichen in einer gemeinsamen vertikalen Ebene (P2;P3) liegen, die senkrecht zur Längsrichtung der Fortbewegung (F) des Förderers (3) verläuft und die Anbringung der Walzenbürsten (12,13,14;26,27) derart ist, dass der von den jeweiligen Achsen (15,16,17;28,29) aufeinanderfolgender Walzen gebildete Winkel durch eine Veränderung der Schrägstellung der Achse mindestens einer Walzenbürste justiert werden kann,
**dadurch gekennzeichnet, dass**
die Walzenbürsten Federwalzen (12,13,14;26,27) sind und dadurch**,** dass die Anbringung dieser Federwalzen (12,13,14;26,27) derart ist, dass die Veränderung der Schrägstellung der Achse (16,17;28,29) mindestens einer Federwalze mit einer Verschiebung (N, O; V, W) dieser Walze (13,14;26,27) entlang der selben Achse einhergeht.

2. Entstaubungsmaschine gemäß Anspruch 1, **dadurch gekennzeichnet, dass** die Schwenkbewegungen (H, J; Q, R) und die eventuellen Verschiebungen (N, O; V, W) verschiedener Federwalzen (13,14;26,27) durch Servomotoren hervorgerufen werden, welche selbst zum Beispiel durch eine Roboter-Steuereinheit, einen programmierbaren Automaten oder einen Mikrocomputer gesteuert sind.

3. Entstaubungsmaschine gemäß Anspruch 1 oder 2, **dadurch gekennzeichnet, dass** diese eine Dachmaschine (6) ist und drei Federwalzen (12,13,14) umfasst, und zwar eine zentrale Walze (12) mit einer horizontalen Achse (15) und zwei seitlichen Walzen (13,14), deren Achsen (16,17), insbesondere in symmetrischer Weise bezüglich der Horizontalen, neigbar sind, wobei die jeweiligen Achsen (15,16,17) der drei Walzen (12,13,14) ungeachtet der Schrägstellung der seitlichen Walzen (13,14) in der selben vertikalen Ebene (P2) gehalten werden.

4. Entstaubungsmaschine gemäß Anspruch 3, **dadurch gekennzeichnet, dass** die zwei seitlichen Walzen (13,14), in dem Maße, wie sie sich neigen, eine Verschiebung (N, O) längs ihrer entsprechenden Achsen (16,17) ausführen, um die Federdichte in den Berührpunkten (22,23) der seitlichen Walzen (13,14) mit der zentralen Walze (12) im Wesentlichen konstant zu halten.

5. Entstaubungsmaschine gemäß Anspruch 3 oder 4, **dadurch gekennzeichnet, dass** die Gruppe der drei Walzen (12,13,14) dieser Dachmaschine (6) von einem horizontalen Absaugkasten (11) getragen wird, der nach oben und unten bewegt (G) werden kann, um die Höhe dieser Walzengruppe verändern zu können.

6. Entstaubungsmaschine gemäß Anspruch 1 oder 2, **dadurch gekennzeichnet, dass** diese eine Seitenmaschine (4,5) ist und zwei übereinander angeordnete Federwalzen (26,27) umfasst, deren jeweiligen Achsen (28,29) unabhängig von einander bezüglich der Vertikalen neigbar sind, wobei die jeweiligen Achsen (28,29) der beiden Walzen (26,27) ungeachtet ihrer Neigung in der selben vertikalen Ebene (P3) gehalten werden.

7. Entstaubungsmaschine gemäß Anspruch 6, **dadurch gekennzeichnet, dass** mindestens eine der beiden Walzen (26,27) in Abhängigkeit von ihrer Neigung eine Verschiebung (V,W) längs ihrer Achse (28,29) ausführt, um die Federdichte in dem Berührpunkt (35) der beiden Walzen (26,27) im Wesentlichen konstant zu halten.

8. Entstaubungsmaschine gemäß Anspruch 6 oder 7, **dadurch gekennzeichnet, dass** die Gruppe der beiden übereinander angeordneten Walzen (26,27) dieser Seitenmaschine (4,5) von einem vertikalen Kasten (25) getragen wird, der transversal zur longitudinalen Bewegungsrichtung (F) des Förderers (3) verschoben (U) werden kann, um sich der Mittelebene (P1) des Förderers (3) anzunähern oder sich von dieser zu entfernen.
